# EUROPEAN PATENT SPECIFICATION

(11) **EP 4 378 052 B1**
(45) Date of publication and mention of the grant of the patent: **02.12.2026**
(21) Application number: 22809930.5
(22) Date of filing: 30.08.2022
(51) Int. Cl.: H02J 50/12, H02J 50/80, H04R 1/10, H04R 25/00

(54) **TEMPERATURE REDUCTION FOR WIRELESS CHARGING**
TEMPERATURREDUZIERUNG BEIM DRAHTLOSEN LADEN
RÉDUCTION DE TEMPÉRATURE POUR RECHARGE SANS FIL

(30) Priority: 30.08.2021 SG 10202109500S
(43) Date of publication of application: 05.06.2024
(73) Proprietor: Sivantos Pte. Ltd., Singapore 539775 (SG)
(72) Inventor: NARAMPANAWE, Nishshanka Bandara, Singapore 649491 (SG); YAP, Heng Goh, Singapore 338521 (SG); ONG, Chuan En Andrew, Singapore 680157 (SG); LER, Gee Heng, Penang Malaysia, 10150 (MY); SIEW, Chee Kong, Singapore 530371 (SG); RATHNAYAKA MUDIYANSELAGE, Sooriya Bandara, Woodlands Ave 9, 11-03 Singapore 738968 (SG)
(74) Representative: FDST Patentanwälte
(86) International application number: PCT/SG2022/050629
(87) International publication number: WO 2023/033739

(56) References cited:
- CN-U- 210 074 886
- US-A1- 2015 222 330
- US-A1- 2016 277 848
- US-A1- 2016 365 751
- US-A1- 2018 054 682
- US-A1- 2018 123 355
- US-A1- 2018 359 576
- US-A1- 2020 007 998
- US-A1- 2020 127 495
- US-A1- 2020 251 929

## Description

The invention relates to an electronic device, in particular a hearing instrument, having a rechargeable battery and a receiver circuit for wirelessly receiving energy for charging the battery. The invention also relates to an inductive charging system comprising the electronic device and a charger for wirelessly charging the battery.

Generally, a hearing instrument is an electronic device being designed to support the hearing of person wearing it (which person is called the user or wearer of the hearing instrument). In particular, the invention relates to a hearing aid, i.e., a hearing instrument that is specifically configured to at least partially compensate a hearing impairment of a hearing-impaired user. Other types of hearing instruments are designed to support the hearing of normal hearing users, i.e., to improve speech perception in complex acoustic situations. Furthermore, the term hearing instrument, as used herein, may relate to a device for streaming an audio signal such as speech or music, e.g. a headset, headphone, ear buds, etc.

Hearing instruments are most often designed to be worn in or at the ear of the user, e.g., as a Behind-The-Ear (BTE) or In-The-Ear (ITE) instrument. With respect to its internal structure, a hearing instrument normally comprises an (acousto-electric) input transducer, a signal processor and an output transducer. During operation of the hearing instrument, the input transducer captures a sound signal from an environment of the hearing instrument and converts it into an input audio signal (i.e., an electric signal transporting a sound information). In the signal processor, the captured sound signal (i.e., input audio signal) is processed, in particular amplified dependent on sound frequency, to support the hearing of the user (in particular to compensate a hearing-impairment of the user). Optionally, the captured sound signal may also be processed to suppress ambient noise, suppress acoustic feedback, etc. The signal processor outputs a processed audio signal (also called processed sound signal) to the output transducer. Most often, the output transducer is an electro-acoustic transducer (also called "receiver") that converts the processed sound signal into a processed air-borne sound, which is emitted into the ear canal of the user. Alternatively, the output transducer may be an electro-mechanical transducer that converts the processed sound signal into a structure-borne sound (vibrations) that is transmitted, e.g., to the cranial bone of the user. Furthermore, besides classical hearing instruments as described before, there are implanted hearing instruments such as cochlear implants, and hearing instruments the output transducers of which output the processed sound signal by directly stimulating the auditory nerve of the user.

Wireless charging of hearing instruments has been proven viable using near-field magnetic or electromagnetic coupling between transmitter and receiver coils, located in the charger and the hearing instrument, respectively.

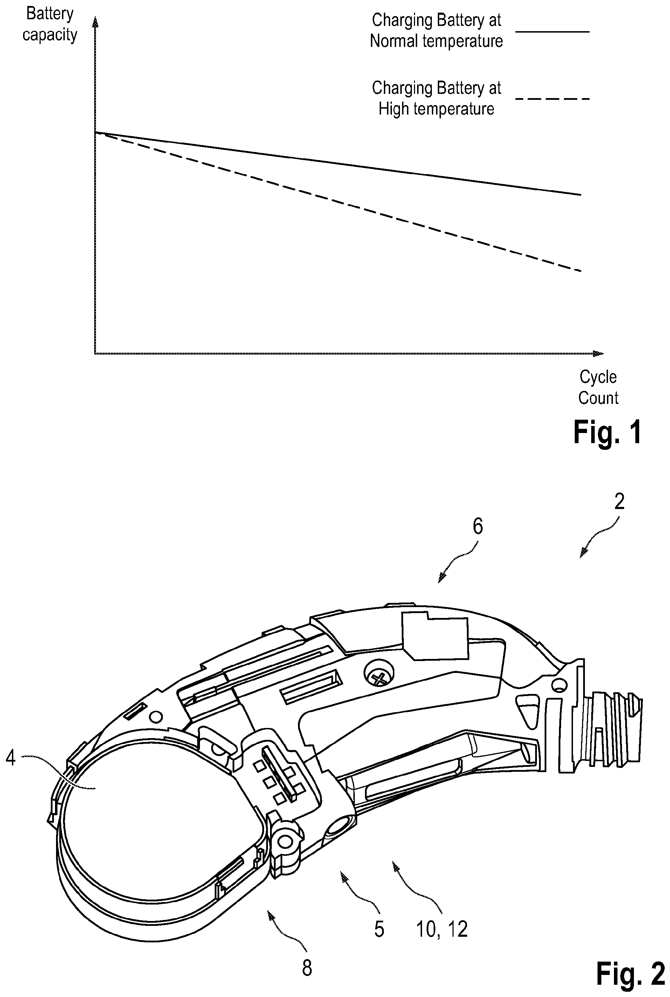

Heat generated during wireless charging is always a major concern. The generated heat can lead to high temperatures that may degrade or damage the battery. Degradation of the battery typically results in a shortened life span and/or a lower capacity of the battery. Fig. 1 shows that a battery that is charged at higher temperature has a faster decrement of the capacity over time (indicated in charging cycle counts) with a steeper gradient than an identical battery that is charged at a lower temperature. Charging the battery at high temperatures can also involve security issues as the battery may catch fire or explode due to overheating.

Three major heat sources within the receiver system (i.e. the electronic device to be charged) during charging are the receiver coil, the rectifier (which may be realized by a diode), and a power management circuit (also referred to as the Power Management Module, PMM). In a wireless charging system, the receiver coil induces an AC charging current flow when it is immersed in the magnetic field created by the charger. The AC charging current is hereby the factor of heat generation as a high current flow through the receiver coil will cause dissipation of more heat to the ambient. The rectifier circuit converts AC energy to DC energy, thereby also dissipating energy. During charging, the PMM regulates the level of the DC charging current to an appropriate value and supplies the regulated charging current to the battery to charge the latter. Additionally, the PMM has an overhead power consumption for the internal PMM function. The excess power given to the PMM is converted to heat and dissipated to the ambient.

The heat generated during wireless charging is a particular problem for wirelessly chargeable hearing instruments as, due to the very small size of such devices, it is difficult to drain off the heat or otherwise protect the battery against over-heating. However, similar problems occur, more or less pronounced, for many electronic devices that can be charged wirelessly.

It is, thus, an object of the invention to efficiently protect an electronic device, in particular a hearing instrument, having a rechargeable battery and means for wireless charging of the battery against the heat that is generated during wireless charging. In particular, the battery of the electronic device shall be protected.

This invention discloses a temperature reduction design for a receiver system (i.e. an electronic device to be charged wirelessly). The increase of temperature in the battery shall be reduced, when the electronic device is charged, especially at high ambient temperature. Hearing aid devices with wireless charging using communication between the device and the charger using a load modulation scheme are known from US 2020/127495 A1 and US 2018/123355 A1.

According to the invention, as specified in claim 1, an electronic device, in particular a hearing instrument, is provided. The electronic device comprises a rechargeable battery, a receiver circuit for wirelessly receiving energy for charging the battery, and a power management circuit for regulating the level of the charging current to a value appropriate for charging the battery. Herein, the invention relates to minimizing a load modulation current for communication of the receiver system with a charger of the inductive charging system.

In general, the invention suggests to provide the load modulation unit to be operable in an adjustment routine in which it adjusts the amplitude of the load modulation to a minimum amplitude for which a stable communication between the electronic device and the charger is established.

Preferred embodiments of the invention are described subsequently, in particular with respect to the dependent claims.

A first preferred aspect of the invention relates to selecting an appropriate number of winding turns of the receiver coil. A second preferred aspect of the invention relates to arranging the power management circuit (subsequently called Power Management Module, PMM) on a printed circuit board of the electronic device so that it faces away from the battery. In particular, the printed circuit board may be a motherboard on which, next to PMM, other electronic components of the electronic device are integrated). In general, the second preferred aspect of the invention suggests placing the PMM far from the battery, as the PMM is recognized as one of the main heat sources during charging. Herein, the term "far" is understood in a thermal sense (thus, indicating an ineffective heat transfer from the PMM to the battery) By positioning the PMM on the side of a printed circuit board that faces away from the battery, effective heat dissipation to the environment of the electronic device is achieved. In contrast, the heat transfer from the PMM to the battery is made ineffective as the battery is thermally shielded from the PMM and the heat created therein by the printed circuit board. Thus, heat transfer from the PMM to the battery is suppressed even if the PMM and the battery are arranged close to each other in a spatial sense. A third preferred aspect of the invention relates to reducing the temperature by controlling the charging input voltage to exceed the battery voltage only by a minimum voltage required for charging.

The selection of the number of winding turns of the receiver coil is based on the quality factor, inductance, and resistance of the receiver circuit, and the overall system communication stability.

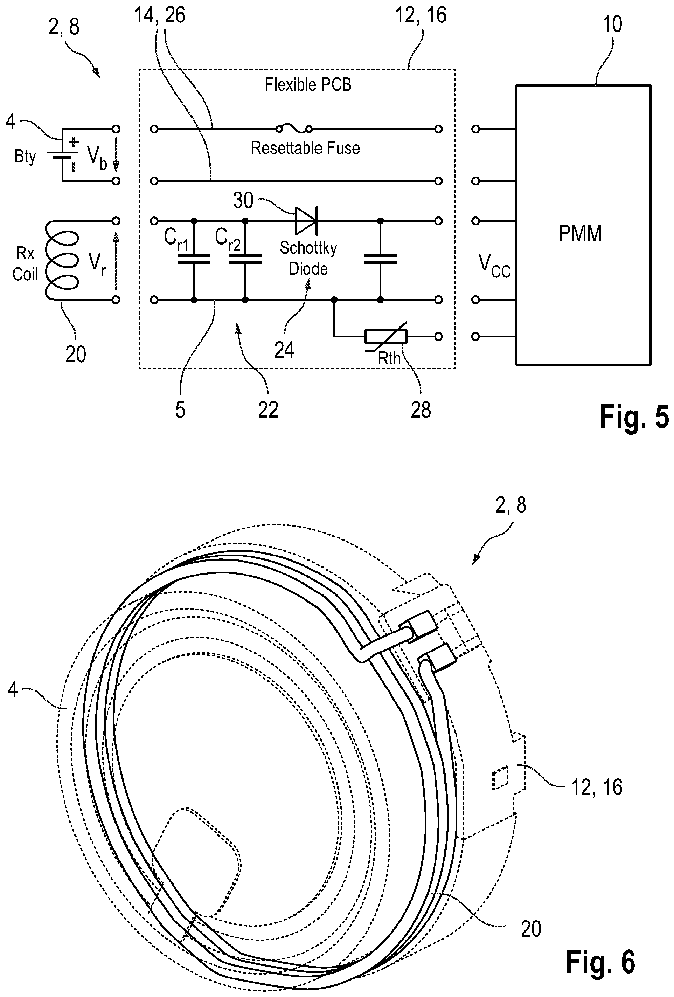

The induced voltage Vᵣ (Fig. 5) across the receiver coil is the sum of the voltage across rectifier diode V_{d} and the charging input voltage Vcc (Fig. 5) to the PMM as represented in equation Eq. 1: ${V}_{r} = {V}_{d} + {V}_{CC}$ Eq. 1

The induced voltage Vᵣ at the receiver coil is also the product of the induced AC charging current flow I_{AC} and the capacitor impedance Zc, as presented in Eq. 2: ${V}_{r} = {I}_{AC} ⋅ {Z}_{C}$ Eq. 2

Since the AC charging current flow through the receiver coil is one of the main causes of heat generation during charging, the invention suggests increasing the capacitor impedance Zc in order to reduce the induced AC charging current flow.

The capacitor impedance Zc is inversely proportional to the resonance capacitance C_{T}, as presented in Eq. 3, ${Z}_{C} = 1 / \left(ω⋅{C}_{T}\right) ,$ Eq. 3 where C_{T} = Cᵣ₁ + Cᵣ₂ (Fig. 5), which implies that the resonance capacitance C_{T} must be small to create a high capacitor impedance Zc.

At the resonance frequency of the receiver circuit including the receiver coil, the inductance L of the receiver coil is inverse to the resonance capacitance, as represented in Eq. 4: $L = 1 / \left({ω}^{2}⋅{C}_{T}\right)$ Eq. 4

A low resonance capacitance C_{T} implies that a high inductance L is required at the receiver coil to have a low heat generated.

On the one hand, if the number of windings of the receiver coil was increased, the larger number of winding turns of the receiver coil would lead to a higher inductance value. However, on the other hand, a larger number of winding turns would entail a higher resistance due to an increased length of the receiver coil path. A higher resistance can then result in a lower quality factor of the receiver circuit; and a lower quality factor of the receiver circuit would cause a lower efficiency of the overall charging system that would result in more transmitted power required at the charger system to compensate for the reduced efficiency of the receiver system.

The inventors also noted that a large number of winding turns of the receiver coil can cause a high induced voltage at the receiver coil, as the induced voltage is proportional to the inductance of the receiver coil as presented in Eq. 5, ${V}_{r} ∝ L ,$ Eq. 5 which can be derived from Eqs. 2, 3, and 4. Having a larger number of winding turns, the receiver coil will generate a higher amplitude of the voltage for the load modulation signal. As such, in an inductive charging system in which the receiver system and the charger communicate via load modulation of the charging current, a high number of winding turns of the receiver coil can cause disturbances or disruptions of the communication, at least if the rectifier of the receiving circuit is realized by a diode. This is because the rectifier diode clamps (i.e. limits) the induced voltage of the receiver coil to the predefined limit (referred to as the clamping voltage of the rectifier diode). Due to this clamping effect, the load modulation signal can be distorted by the rectifier diode, if the induced voltage in the receiver coil exceeds the clamping voltage. This distortion may cause reading errors during demodulation of the load modulation signal in the charger or even make the load modulation signal unreadable.

It is clear from the fore-going that there is an optimal number of winding turns of the receiver coil in view of reducing the heat generated in the receiver coil while still ensuring stability of communication and wireless charging.

In a preferred embodiment of the invention, the inductance L of the receiver coil, the quality factor of the battery coil module, and the communication stability are the factors brought together for the determination of winding turns for the temperature reduction design. Concluding, the inventors suggest considering the inductance of the receiver coil, the quality factor of the receiver circuit, and the communication stability for the determination of the number of winding turns of the receiver coil such that a minimum of heat is generated in the receiver coil during charging while the communication of the receiver system with the charger via load modulation is maintained stable.

In a preferred embodiment of the electronic device according to the invention, an very appropriate number of winding turns of the receiver coil was determined to be between three and four (i.e. at least three winding turns and not more than four winding turns). This design of the receiver coil is of particular benefit for embodiments in which the electronic device is a hearing instrument. In a most preferred embodiment, the receiver coil is designed to have three winding turns.

The utilization of load modulation for the communication between charger system and receiver system has the functionality of varying the amplitude of the induced charging current to carry the communication signal which is results in a variation of the induced voltage of the receiver coil and a modulation of the energy transferred from the charger to the electronic device.

However, the load modulation communication generates additional heat in the PMM as it contributes to the power consumption of the PMM. The higher the amplitude of the load modulation signal is chosen, the more excess power is required, and the more heat is generated in the PMM. In view of this effect, the invention suggests setting the amplitude of the load modulation signal to a bare minimum necessary to maintain communication stability in order reduce heat generation in the PMM.

In order to determine the minimum amplitude of the load modulation signal, the communication may start at the lowest amplitude available, sending, e.g., a communication test signal. The amplitude of the load modulation signal is, then, iteratively increased until stable communication is achieved. In case of a unidirectional conversation from the electronic device to the charger, the stability of communication is verified in the receiver system by checking whether the charger reacts to the communication test signal, e.g. by varying the transmitted power according to the communication test signal. In case of a bidirectional conversation, the charger sends an acknowledgment signal to verify stability of communication. In an alternative embodiment, in order to determine the minimum amplitude of the load modulation signal, the communication test signal is initially created with a high load modulation amplitude which is iteratively reduced until stable communication is lost.

Correspondingly, according to the present invention, the electronic device comprises a load modulation unit being designed to modulate the charging current in order to transfer a communication signal from the electronic device to the charger by load modulation. Optionally, the load modulation unit is integrated in the power management module. In an adjustment routine, the load modulation unit is operable to adjust the amplitude of the load modulation to a minimum amplitude for which a stable communication between the electronic device and the charger is established. Preferably, the load modulation unit is designed to repeat the adjustment routine in regular or irregular intervals during operation of the electronic device.

In a preferred embodiment, the charger of the inductive charging system has the feature of varying transmitted power based on the battery voltage which can effectively lower an excess of received power given to the PMM for charging the battery. Lowering the excess of received power can lower the heat generated in the PMM. In order to reduce heat generation, the voltage across the charging input of the PMM, Vcc, is varied such that it exceeds the battery voltage V_{b} only by a minimum voltage Vₘᵢₙ that is just required for charging, see Eq. 6: ${V}_{CC} = {V}_{min} + {V}_{b}$ Eq. 6

The minimum voltage Vₘᵢₙ may be preset or determined by the PMM. In the latter case, the PMM is operable to determine a minimum value of the charging voltage applied by the receiver circuit to the PMM. Furthermore, the PMM is operable to create a communication signal to be sent to the charger (e.g. using load modulation as described above), said communication signal causing the charger to adjust the amplitude of the magnetic field created by the charger so that the charging voltage corresponds to the minimum value.

In order to determine the minimum value, Vₘᵢₙ, of the charging voltage, preferably, the PMM applies an iterative process. For example, the PMM 10 may start with a low test value of the minimum voltage Vₘᵢₙ and increase said test value iteratively until stability of the charging process is achieved and, thus, the minimum value, Vₘᵢₙ is found. Alternatively, the PMM 10 may start with a high test value for the minimum charging voltage and decrease this test value until the stability of the charging process is lost. The PMM, then, assigns the last test value for which a stable charging process could be established to the minimum charging voltage.

In an exemplary embodiment, the concept of the charging input voltage control technique may be based on a closed-loop control whereby the receiver system sends the battery voltage information back to the charger via the load modulation communication. Then, the charger controls the transmitted power to generate a charging input voltage that is just above the battery voltage by adding a minimum overhead voltage that is defined by the PMM. For the whole voltage control cycle, the process starts with providing an initial transmitted power from the charger system to generate a magnetic field. By virtue of magnetic or electro-magnetic coupling of a transmitter coil of the charger and the receiver coil, the receiver coil immersed in the magnetic field induces the AC charging voltage. The AC charging voltage is converted into a DC charging voltage by a rectifier diode. The converted DC charging voltage is fed to the charging voltage input of the PMM which starts charging the battery. The PMM monitors the battery voltage and sends a load modulation signal that contains an information on the battery voltage to the charger system via the magnetic or electro-magnetic coupling of the receiver coil and the charger's transmitter coil. The received load modulation signal is demodulated and processed in the charger.

The processed signal that contains information on the battery voltage is used as a reference for varying the transmitted power in the charger system. This variation of the transmitted power in the charger system is used for indirectly varying the charging input voltage Vcc of the PMM to a voltage value.

This voltage control cycle is repeated while monitoring the battery voltage V_{b} and increasing the charging input voltage Vcc accordingly.

Preferably, the method shall be used in a magnetic resonance (MR) charging system. Herein, the charger creates a magnetic or electric-magnetic field, the frequency of which corresponds to a resonance frequency of the receiver circuit.

In preferred embodiments, the PMM is realized as a programmable device (e.g. a microcontroller). In this case, the functionality mentioned above or part of said functionality may be implemented as software (in particular firmware). Also, the PMM may be a non-programmable device (e.g. an ASIC). In this case, the functionality mentioned above or part of said functionality may be implemented as hardware circuitry. Moreover, the PMM may be realized as a combination of at least one programmable unit and at least one non-programmable unit.

Another embodiment of the invention is an inductive charging system comprising the electronic device according to the invention as described above, and a charger for wirelessly charging the battery of the electronic device. Any embodiment of the electronic device corresponds to an embodiment of the inductive charging system. Thus, the above disclosure relating to embodiments of the electronic device can be transferred to the inductive charging system, and vice versa.

Embodiments of the present invention are illustrated in the enclosed drawings in which
- Fig. 1: is a schematic diagram of the development of the battery capacity over time, indicated in charging cycle counts, for a receiver system, here a hearing instrument, having a rechargeable battery and means for wirelessly charging the battery, said receiver system being charged at normal temperature (solid line), and a corresponding receiver system being charged at a high temperature (dashed line),
- Fig. 2: is a perspective view of an inner structure of a known BTE/RIC hearing instrument (i.e. BTE/RIC hearing instrument without housing and ear piece), the hearing instrument having a rechargeable battery and means for wirelessly recharging the battery,
- Fig. 3: is a perspective view of a battery coil module, a printed circuit board and a power management module (PMM) of a hearing instrument according to the invention, wherein the printed circuit board surrounds the battery and wherein the PMM is arranged on an outside area of the printed circuit board facing away from the battery,
- Fig. 4: is a schematic block diagram showing the battery coil module and the power management module (PMM) of a hearing instrument according to the invention, wherein the battery coil module includes a battery, a receiving coil a resonance circuit,
- Fig. 5: is another schematic block diagram showing the battery coil module and the PMM of a hearing instrument according to the invention, wherein the receiving circuit and a battery circuit of the battery coil module are integrated on a printed circuit board,
- Fig. 6: is a perspective view of the battery coil module of the hearing instrument according to the invention in which the battery coil module comprises a cylinder-shaped battery (shown transparently), a receiver coil wound around a circumferential wall of the battery, and a flexible circuit board comprising parts of the receiver circuit and a battery circuit,
- Fig. 7: is a schematic diagram of the charging input voltage, Vcc (dashed line) fed to PMM by the receiver circuit of the battery coil module and the battery voltage, V_{b} (solid line), over time,
- Fig. 8: is a schematic flow diagram of a method for controlling the power transmitted from the charger to the receiver system and, thus, the value of the charging input voltage, Vcc, so to reduce heat generation in the PMM to a minimum,
- Fig. 9: is a schematic flow diagram of a method for determining a winding number of the receiving coil, and
- Fig. 10: is a schematic flow diagram of a method for determining an appropriate amplitude of the load modulation current for wireless communication between the hearing instrument and a charger.

In the figures, like reference numerals indicate like parts, structures and elements unless otherwise indicated.

Fig. 1, as described before, shows the development of the battery capacity over time (indicated in charging cycle counts) for a receiver system, here a hearing instrument having a rechargeable battery and means for wirelessly charging the battery). A solid line indicates the development of the battery capacity, if the receiver system is charged at normal temperature. A dashed line indicates the development of the battery capacity of a corresponding receiver system, the battery of which is charged at high temperature. It can be seen from the figure that the battery that is charged at higher temperature has a faster decrement of the capacity over time with a steeper gradient than the identical battery that is charged at a lower temperature.

Fig. 2 shows a functional block diagram of a known electronic device, which electronic device, in the shown example, is a known BTE/RIC hearing instrument 2'. Preferably, the hearing instrument 2' is a hearing aid provided and designed to support the hearing of a hearing-impaired user.

Together with a charger (not shown), the hearing instrument 2' forms an inductive charging system. In the inductive charging system, the charger is wirelessly coupled to the hearing instrument 2' via a magnetic or electromagnetic field to transfer energy to the hearing instrument 2' thereby charging a rechargeable battery 4' of the hearing instrument 2'. The magnetic or electromagnetic field is created with a frequency that matches a resonance frequency of a receiver circuit 5' of the hearing instrument 2'. Thus, the hearing instrument 2' and the charger form a magnetic resonance (MR) charging system.

The hearing instrument 2' comprises a consuming unit 6' consuming electric energy in an operational state of the hearing instrument 2'. In the case of the hearing instrument 2', the consuming unit 6' comprises, e.g., a digital signal processor, a receiver, at least one microphone, etc.

The hearing instrument 2' further comprises a battery coil module 8' and an electric power management circuit (also referred to as "Power Management Module" or PMM 10'). Preferably, the consuming unit 6' (or at least a part thereof) and the PMM 10' are integrated on a printed circuit board (subsequently denoted motherboard 12').

In preferred embodiments, a hearing instrument 2 according to the invention corresponds to the hearing instrument 2 of Fig. 2 except for the differences described hereafter.

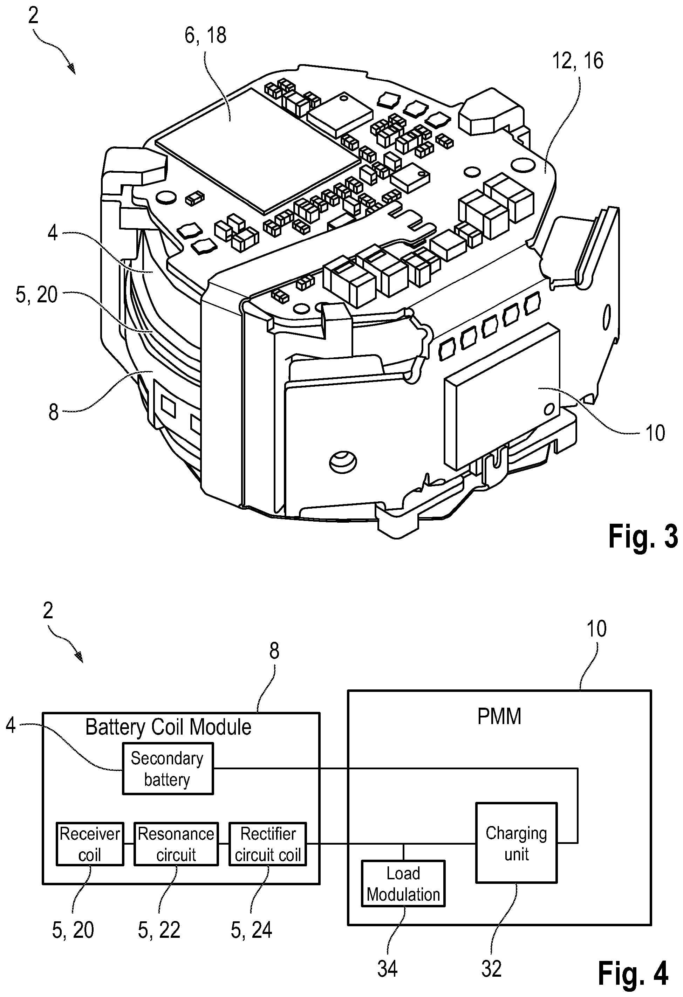

As shown in Figs. 3 to 6, a battery coil module 8 of the hearing instrument 2 according to the invention comprises a rechargeable battery 4, a receiver circuit 5 and a battery circuit 14, which may be integrated on a flexible printed circuit board (PCB 16). Thus, the battery coil module 8 contains an energy receiver mechanism and an energy storage mechanism. Preferably, the PCB 16 is a part of a motherboard 12 also containing a PMM 10 and a consuming unit 6 or a part thereof, in particular a digital signal processor 18. Fig. 3 specifically shows an embodiment of the battery coil module 8 being designed for an ITE hearing instrument.

As the most prominent part of the receiver circuit 5, the battery coil module 8 comprises a receiver coil 20 which is wound around a circumferential wall of the battery 4. In the examples of Fig. 3 to 6, the receiver circuit 5 further comprises a resonance circuit 22 and a rectifier circuit (rectifier 24).

As the most prominent part of the battery circuit 14, the battery coil module 8 comprises the rechargeable battery 4 (which is also referred to as the "secondary battery"). In the example of Fig. 3 to 6, the battery circuit 16 further comprises a battery supply line 26 electrically connecting the battery 4 with the PMM 10.

In the examples of Fig. 3 to 6, the battery coil module 8 further comprises a temperature sensor which, here, is realized by a thermistor 28. The battery supply line 26 and the thermistor 28 may be integrated on the PCB 16.

A first functionality of the battery coil module 8 (more precisely of the receiver circuit 5) is to capture magnetic or electro-magnetic energy by magnetic or electromagnetic coupling of the receiver coil 20 and a transmitter coil (not shown) of the charger and to convert said magnetic or electro-magnetic energy into electric energy, when the receiver coil 20 is immersed to a magnetic or electro-magnetic field of the transmitter coil.

A second functionality of the battery coil module 8 (more precisely of the battery circuit 16) is to store electric energy received by the receiver circuit 14 and to provide this energy by acting as source for supplying power to the hearing instrument 2, in particular to the consuming unit 6, in an operational state of the hearing instrument 2.

A third functionality of the battery coil module 8 (more precisely of the thermistor 28) is to sense the temperature of the battery 4, in order to recognize an imminent over-heating of the battery 4.

The rectifier 24 comprises a diode 30 (preferably realized as a Schottky diode) to convert the AC energy produced by the receiver coil 20 into DC energy (i.e. a DC charging current). The diode 30 is connected in series to the receiver coil 20. In addition, the diode 30 has a voltage clamping feature that limits the output voltage of the battery coil module 8 (i.e. the voltage of the charging current) to its breakdown voltage.

The basic functionality of the PMM 10 is to control the charging current and to monitor the voltage V_{b} of the battery 4. Preferably, the PMM 10 furthermore transforms the voltage of the battery 4 and outputs the transformed voltage to the consuming unit 6. The PMM 10 can be realised in the form of a discrete component circuit or as an integrated circuit. It may also include a programmable unit such as a microcontroller.

An output of the battery coil module 8 is connected to a charging input terminal of PMM 10. Within the PMM 10, the charging input terminal connects to a charging unit 32. Further to the charging unit 32, the PMM 10 comprises a load modulation unit 34 that modulates a load modulation signal onto the charging current as described in the fore-going.

An output of the charging unit 32 is connected to a transformation unit (not shown) for supplying the consuming unit 6 of the hearing instrument 2. The output of the charging unit 32 is also connected to a charging/discharging input terminal of the PMM 10.

A charging control (not shown) of the hearing instrument 2 switches the PMM 10 to a charging state when the voltage of the charging current in the PMM 10 exceeds a predefined threshold value. The charging control switches the PMM 10 to a discharging state when said voltage falls below the threshold value. In an operation state of the hearing instrument 2, the transformation unit of the PMM 10 provides output power with a constant voltage to the consuming unit 6.

A temperature monitoring unit (not shown) of the PMM 10 converts the resistance of the thermistor 28 to a voltage signal to monitor the temperature of the battery 4.

As seen from Fig. 3, the PMM 10 is integrated on the motherboard 12 which is folded around the battery 4 and, thus surrounds the battery 4. Herein, the PMM 10 is placed on a side of the motherboard 12 that faces away from the battery 4. Thus, the PMM 10 is positioned far from the battery 4 to reduce heat transfer from the PMM 10 to the battery 4 and to support heat dissipation to the environment.

As can be seen from Fig. 6, the receiving coil 20 comprises 3 windings turns.

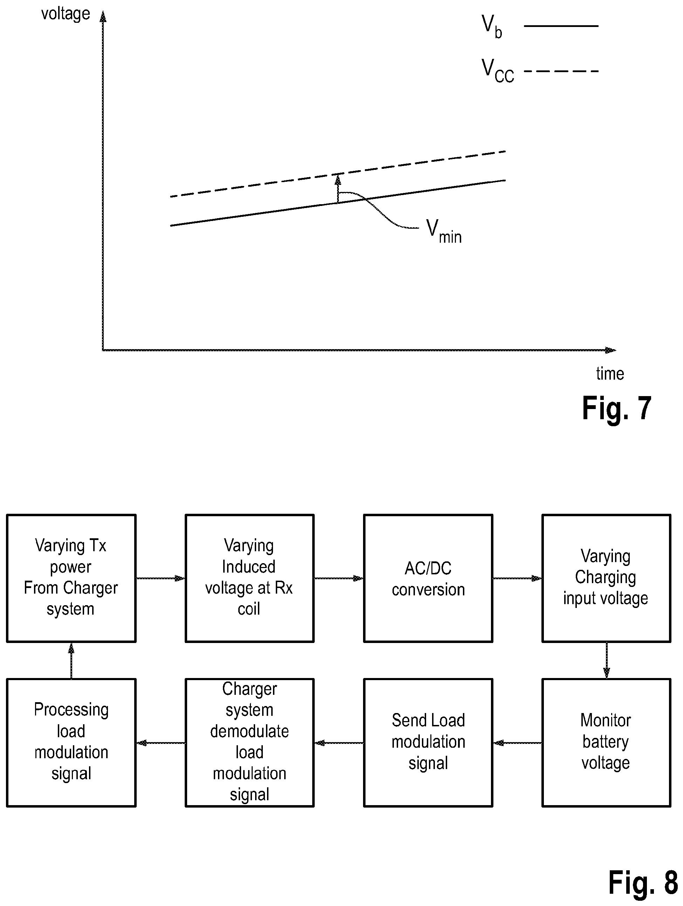

In the embodiments of the hearing instrument 2 according to Fig. 3 to 6, the load modulation unit 34 of the PMM 10 controls the power transmitted from the charger to the hearing instrument 2 via the load modulation signal sent to the charger, such that the charging input voltage Vcc to the PMM 10 exceeds the battery voltage V_{b} by a minimum voltage Vₘᵢₙ required for charging, see Eq. 6. This dependence of the charging input voltage V_{cc} from the battery voltage V_{b} (which slowly increases during a charging process), is shown in Fig. 7.

Fig. 8 shows a process cycle, in which - under the control auf the load modulation unit 34 - the power transmitted from the charger and, thus, the charging input voltage Vcc are continuously adapted to the battery voltage V_{b}. The process starts with setting an initial transmitted power from the charger system to generate a magnetic field. Then, the receiver coil 20 immersed in the magnetic field induces an AC resonated energy. The resonated AC energy is converted to DC energy by the rectifier diode 30. The converted DC voltage is input to the charging input of the PMM 10 to begin charging the secondary battery. The PMM 10 monitors the battery voltage and the charging input voltage. It then sends the data that contains the battery voltage and the charging input voltage information back to the charger system via the receiver coil 20. The received data is demodulated and processed at the charger system. The processed signal is used for calculating the transmit power required to reduce the error difference between the charging input voltage and the summation of the minimum required charging voltage to the PMM 10 and battery voltage. Finally, the calculated new processed transmitted power is used as a reference to be set in the charger system to transmit the necessary power to charge the battery 4.

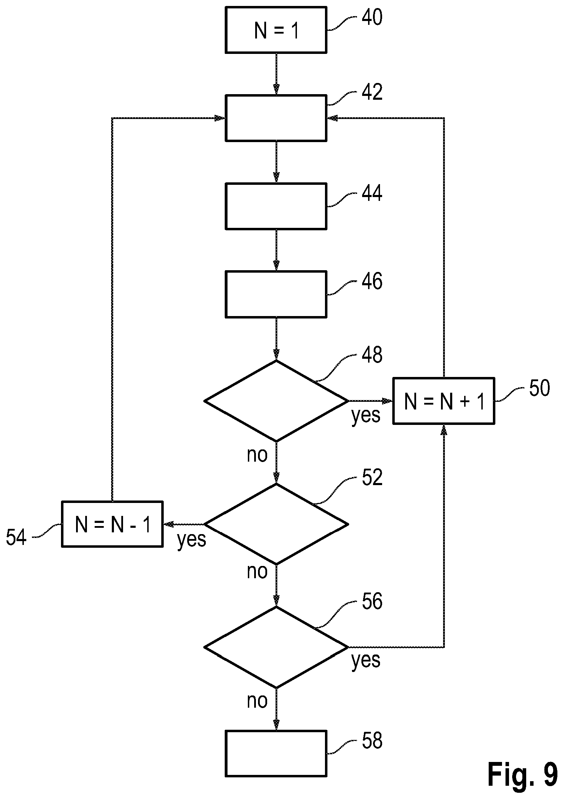

The inductance of the receiver coil 20, the quality factor of the battery coil module 8, and the communication stability are the factors brought together for the determination the number of winding turns to minimize the generate heat during charging. The number of winding turns can be determined, e.g., using a method illustrated in Fig 9.

At start of this method (step 40), the number N of winding turns is set to one (N = 1) or another predefined minimum number to achieve the lowest cost and best inductance tolerance control. In a next step 42, the battery coil module 8 is built and integrated into the hearing instrument 2. Then (step 44), the inductance and quality factor of the battery coil module 8 are measured. In a next step 46, the hearing instrument 2 is placed on the charger and a charging test is performed during which the voltage Vcc induced at the charging input of the PMM 10 is measured.

The measured voltage Vcc is compared with a predefined input voltage threshold (e.g. 5V) that is required at the PMM 10 to charge the battery 4 (step 48). Preferably, the input voltage threshold is the sum of the maximum battery voltage and the minimum voltage required at the PMM10. If, for example, the maximum battery voltage is 4.2V and the minimum voltage required at the PMM 10 in the charging state is 0.8V, then the input voltage threshold may be set to 5.0V.

If the induced voltage Vcc is less than the predefined input voltage threshold ("yes"), then, in step 50, the number of winding turns is increased by one (N = N + 1) to increase the induced voltage and steps 42 to 48 are performed again with the adapted receiver coil 20. If otherwise ("no") the induced voltage Vcc is equal to or exceeds the input voltage threshold (which means that the battery 4 can be charged in its entire voltage range), then the charging test is continued by comparing the induced voltage Vcc with a predefined maximum voltage which maximum voltage is set to be close to or correspond to the clamping limit of the rectifier diode 30 (step 52).

The maximum voltage is selected so that there is no or insufficient voltage range left for load modulation, if the induced voltage Vcc exceeds said maximum voltage. In this situation, a communication signal created by load modulation in the PMM 10 and sent from the hearing instrument 2 to the charger may or will be distorted and may not be recognized and interpreted correctly in the charger. If therefore, in step 52, the induced voltage Vcc is found to exceed said maximum voltage ("yes"), then, in step 54, the number of winding turns of the receiver coil 20 is reduced by one (N = N - 1) to increase the communication stability. If otherwise ("no") the induced voltage Vcc is found to undershoot the maximum voltage, then the charging test is continued by monitoring the temperature of the battery 4 (using the thermistor 28) over the entire charging period and comparing the monitored temperature with a predefined temperature threshold (step 56).

If the monitored temperature is found to exceed the temperature threshold (which is selected so to conform with a specification of the battery 4), then the number of winding turns of the receiver coil 20 is increased by one (step 50) to increase the inductance and reduce the AC resonated current and steps 42 to 48 are performed again with the amended receiver coil 20. If otherwise ("no") the monitored temperature is found not to exceed the temperature threshold, then the method is terminated (step 58).

The inventors have found that a design of the receiver coil 20 with three to four winding turns is very appropriate with respect to an effective energy transfer from the charger to the hearing instrument 2, with respect to the possibility of sending communications signals between the hearing instrument 2 and the charger as well as with respect to a low heat production during charging. In a preferred embodiment, the receiver coil 20 is designed with 3 winding turns as shown in fig. 6.

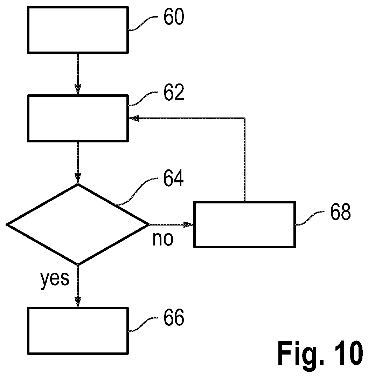

In order to determine an appropriate amplitude of the load modulation current, the load modulation unit 34 may executes a method depicted in Fig. 10. This method starts with setting the load modulation level to the minimum amplitude level (step 60). Then, a full charging test is started (step 62). During the charging test, the load modulation unit 34 checks the communication stability via a continuous communication count (step 64). The charging test is passed if there is no reset of the communication count throughout the entire charging cycle (which means that the communication was stable during the entire charging cycle). In this case ("yes"), the current amplitude level of the load modulation current is stored for later use for load modulation during the operation of the hearing instrument 2 and the method is terminated (step 66). If otherwise ("no") the communication count was reset during the charging test (which means that the communication was discontinued during the charging test), then the level of the load modulation current is increased (step 68) and the steps 62 and 64 are repeated.

It will be appreciated by persons skilled in the art that numerous variations and/or modifications may be made to the invention as shown in the specific examples without departing from the scope of the invention as defined by the appended claims.

### List of Reference Numerals

- 2, 2': hearing instrument
- 4, 4': battery
- 5, 5': receiver circuit
- 6, 6': consuming unit
- 8, 8': battery coil module
- 10, 10': power management module (PMM)
- 12, 12': motherboard
- 14: battery circuit
- 16: flexible printed circuit board (PCB)
- 18: digital signal processor
- 20: receiver coil
- 22: resonance circuit
- 24: rectifier
- 26: battery supply line
- 28: thermistor
- 30: diode
- 32: charging unit
- 34: load modulation unit
- 40: step
- 42: step
- 44: step
- 46: step
- 48: step
- 50: step
- 52: step
- 54: step
- 56: step
- 58: step
- 60: step
- 62: step
- 64: step
- 66: step
- 68: step

## Claims

1. An electronic device, in particular a hearing instrument (2), comprising
- a rechargeable battery (4),
- a receiver circuit (5) for wirelessly receiving energy from a charger and transforming the received energy into a charging current for charging the battery (4), and
- a power management circuit (10) for regulating the level of the charging current,
**characterized in**
a load modulation unit (34) being designed to modulate the charging current in order to transfer a communication from the electronic device to the charger by load modulation and wherein the load modulation unit (34) is operable in an adjustment routine in which it adjusts the amplitude of the load modulation to a minimum amplitude for which a stable communication between the electronic device and the charger is established.

2. An electronic device according to claim 1,
wherein the power management circuit (10) is arranged on a side of a printed circuit board (12,16) of the electronic device that faces away from the battery (4).

3. An electronic device according to claim 2,
wherein the printed circuit board (12,16) is folded and arranged relative to the battery (4) so that it surrounds the battery (4) at least two sides thereof.

4. An electronic device according to anyone of claims 1 to 3,
wherein the receiver circuit (5) includes a receiver coil (20) having a winding with between three and four winding turns, in particular three winding turns.

5. An electronic device according to anyone of claims 1 to 4,
wherein the load modulation unit (34) is designed to repeat the adjustment routine in regular or irregular intervals during operation of the electronic device.

6. An electronic device according to anyone of claims 1 to 5,
wherein the power management circuit (10) is operable to determine a minimum value of the charging voltage applied by the receiver circuit (5) to the power management circuit (10), and wherein the power management circuit (10) is operable to create a communication signal to be sent to the charger, said communication signal causing the charger to adjust the amplitude of the magnetic field created by the charger so that the charging voltage corresponds to the minimum value.

7. An electronic device according to claim 6,
wherein the power management circuit (10), in order to determine said minimum value of the charging voltage, is operable to iteratively increase a reference value of the charging voltage until until stability of the charging process is achieved.

8. An electronic device according to claim 6,
wherein the power management circuit (10), in order to determine said minimum value of the charging voltage, is operable to iteratively decrease a reference value of the charging voltage until until stability of the charging process is lost, and to set said minimum value of the charging voltage to the last reference value for which stability of the charging process had been achieved.

9. An inductive charging system comprising the electronic device according to anyone of the claims 1 to 8, and a charger for wirelessly charging the battery (4) of the electronic device.

## Patentansprüche

1. Elektronisches Gerät, insbesondere Hörinstrument (2), umfassend
- eine wiederaufladbare Batterie (4),
- eine Empfängerschaltung (5) zum drahtlosen Empfangen von Energie von einem Ladegerät und Umwandeln der empfangenen Energie in einen Ladestrom zum Laden der Batterie (4) und
- eine Leistungsverwaltungsschaltung (10) zum Regeln des Pegels des Ladestroms,
**gekennzeichnet durch**
eine Lastmodulationseinheit (34), die dazu ausgelegt ist, den Ladestrom zu modulieren, um eine Kommunikation von dem elektronischen Gerät an das Ladegerät durch Lastmodulation zu übertragen, wobei die Lastmodulationseinheit (34) in einer Einstellroutine betreibbar ist, in der sie die Amplitude der Lastmodulation auf eine Mindestamplitude einstellt, bei der eine stabile Kommunikation zwischen dem elektronischen Gerät und dem Ladegerät hergestellt ist.

2. Elektronisches Gerät nach Anspruch 1,
wobei die Leistungsverwaltungsschaltung (10) auf einer Seite einer Leiterplatte (12, 16) des elektronischen Geräts, die von der Batterie (4) abgewandt ist, angeordnet ist.

3. Elektronisches Gerät nach Anspruch 2,
wobei die Leiterplatte (12, 16) gefaltet und relativ zu der Batterie (4) so angeordnet ist, dass sie die Batterie (4) an mindestens zwei ihrer Seiten umgibt.

4. Elektronisches Gerät nach einem der Ansprüche 1 bis 3,
wobei die Empfängerschaltung (5) eine Empfängerspule (20) mit einer Wicklung mit drei bis vier Wicklungswindungen, insbesondere drei Wicklungswindungen, aufweist.

5. Elektronisches Gerät nach einem der Ansprüche 1 bis 4,
wobei die Lastmodulationseinheit (34) dazu ausgelegt ist, die Einstellroutine in regelmäßigen oder unregelmäßigen Abständen während des Betriebs des elektronischen Geräts zu wiederholen.

6. Elektronisches Gerät nach einem der Ansprüche 1 bis 5,
wobei die Leistungsverwaltungsschaltung (10) dazu betreibbar ist, einen Mindestwert der durch die Empfängerschaltung (5) an die Leistungsverwaltungsschaltung (10) angelegten Ladespannung zu bestimmen, und wobei die Leistungsverwaltungsschaltung (10) dazu betreibbar ist, ein an das Ladegerät zu sendendes Kommunikationssignal zu erzeugen, wobei das Kommunikationssignal bewirkt, dass das Ladegerät die Amplitude des durch das Ladegerät erzeugten magnetischen Felds so anpasst, dass die Ladespannung dem Mindestwert entspricht.

7. Elektronisches Gerät nach Anspruch 6,
wobei die Leistungsverwaltungsschaltung (10), um den Mindestwert der Ladespannung zu bestimmen, dazu betreibbar ist, einen Referenzwert der Ladespannung iterativ so lange zu erhöhen, bis eine Stabilität des Ladeprozesses erzielt wird.

8. Elektronisches Gerät nach Anspruch 6,
wobei die Leistungsverwaltungsschaltung (10), um den Mindestwert der Ladespannung zu bestimmen, dazu betreibbar ist, einen Referenzwert der Ladespannung iterativ so lange zu verringern, bis keine Stabilität des Ladeprozesses mehr gegeben ist, und den Mindestwert der Ladespannung auf den letzten Referenzwert, für den eine Stabilität des Ladeprozesses erzielt worden ist, einzustellen.

9. Induktives Ladesystem, das das elektronische Gerät nach einem der Ansprüche 1 bis 8 und ein Ladegerät zum drahtlosen Laden der Batterie (4) des elektronischen Geräts umfasst.

## Revendications

1. Dispositif électronique, en particulier instrument auditif (2), comprenant
- une batterie rechargeable (4),
- un circuit récepteur (5) destiné à recevoir sans fil de l'énergie provenant d'un chargeur et à transformer l'énergie reçue en un courant de charge destiné à charger la batterie (4), et
- un circuit de gestion de l'alimentation (10) destiné à réguler le niveau du courant de charge,
**caractérisé en ce que**
une unité de modulation de charge (34) est conçue pour moduler le courant de charge afin de transférer une communication depuis le dispositif électronique vers le chargeur par modulation de charge, et dans lequel l'unité de modulation de charge (34) est apte à fonctionner dans une routine de réglage dans laquelle elle règle l'amplitude de la modulation de charge à une amplitude minimale pour laquelle une communication stable entre le dispositif électronique et le chargeur est établie.

2. Dispositif électronique selon la revendication 1,
dans lequel le circuit de gestion de l'alimentation (10) est agencé sur un côté d'une carte de circuit imprimé (12, 16) du dispositif électronique qui est orienté à l'opposé de la batterie (4).

3. Dispositif électronique selon la revendication 2,
dans lequel la carte de circuit imprimé (12, 16) est pliée et agencée par rapport à la batterie (4) de sorte qu'elle entoure la batterie (4) sur au moins deux côtés de celle-ci.

4. Dispositif électronique selon l'une quelconque des revendications 1 à 3,
dans lequel le circuit récepteur (5) comporte une bobine réceptrice (20) pourvue d'un enroulement présentant entre trois et quatre spires d'enroulement, en particulier trois spires d'enroulement.

5. Dispositif électronique selon l'une quelconque des revendications 1 à 4,
dans lequel l'unité de modulation de charge (34) est conçue pour répéter la routine de réglage à intervalles réguliers ou irréguliers pendant le fonctionnement du dispositif électronique.

6. Dispositif électronique selon l'une quelconque des revendications 1 à 5,
dans lequel le circuit de gestion de l'alimentation (10) est apte à fonctionner pour déterminer une valeur minimale de la tension de charge appliquée par le circuit récepteur (5) au circuit de gestion de l'alimentation (10), et dans lequel le circuit de gestion de l'alimentation (10) est apte à fonctionner pour créer un signal de communication devant être envoyé au chargeur, ledit signal de communication amenant le chargeur à régler l'amplitude du champ magnétique créé par le chargeur de sorte que la tension de charge corresponde à la valeur minimale.

7. Dispositif électronique selon la revendication 6,
dans lequel le circuit de gestion de l'alimentation (10), afin de déterminer ladite valeur minimale de la tension de charge, est apte à fonctionner pour augmenter de manière itérative une valeur de référence de la tension de charge jusqu'à obtention de la stabilité du processus de charge.

8. Dispositif électronique selon la revendication 6,
dans lequel le circuit de gestion de l'alimentation (10), afin de déterminer ladite valeur minimale de la tension de charge, est apte à fonctionner pour diminuer de manière itérative une valeur de référence de la tension de charge jusqu'à perte de la stabilité du processus de charge, et pour fixer ladite valeur minimale de la tension de charge à la dernière valeur de référence pour laquelle la stabilité du processus de charge avait été obtenue.

9. Système de charge par induction comprenant le dispositif électronique selon l'une quelconque des revendications 1 à 8, et un chargeur destiné à charger sans fil la batterie (4) du dispositif électronique.
